# EUROPEAN PATENT SPECIFICATION

(11) **EP 0 462 287 B1**
(45) Date of publication and mention of the grant of the patent: **13.11.1996**
(21) Application number: 91901565.1
(22) Date of filing: 28.12.1990
(51) Int. Cl.: C08G 18/08, C08G 18/38, C08G 18/67

(54) **POLYMER COMPOSITION, AQUEOUS DISPERSION PREPARED BY USING THE SAME AS EMULSIFIER, AND WATER-BASE COATING COMPOSITION**
POLYMERZUSAMMENSETZUNG, UNTER VERWENDUNG DERSELBEN ALS EMULGATOR HERGESTELLTE WÄSSRIGE DISPERSION SOWIE BESCHICHTUNGSZUSAMMENSETZUNG AUF WASSERBASIS
COMPOSITION POLYMERE, DISPERSION AQUEUSE PREPAREE AVEC CETTE COMPOSITION EN TANT QU'EMULSIFIANT ET COMPOSITION DE REVETEMENT A BASE D'EAU

(30) Priority: 28.12.1989 JP 339955/89
(43) Date of publication of application: 27.12.1991
(73) Proprietor: NIPPON PAINT CO., LTD., Osaka-shi Osaka 530 (JP)
(72) Inventor: KUWAJIMA, Teruaki, Higashiosaka-shi, Osaka 577 (JP); NINOMIYA, Yusuke, Nishinomiya-shi, Hyogo 662 (JP); KONISHI, Sakuichi, Ikoma-shi, Nara 630-02 (JP)
(74) Representative: Hansen, Bernd, Dr. Dipl.-Chem.
(86) International application number: JP9001729
(87) International publication number: WO9109895

(56) References cited:
- EP-A- 0 085 722
- EP-A- 0 146 326
- EP-A- 0 198 266
- JP-A-57 036 153
- JP-A-59 030 814
- JP-A-61 097 318

## Description

Polymer Compositions, Aqueous Dispersions and Aqueous Paint Compositions by Use Thereof as Emulsifiers

### Field of the Invention

The present invention relates to polymer compositions having urethane bonds together with zwitterionic groups, aqueous dispersions which are derived from polymerization of ethylenically unsaturated monomers in the presence thereof and aqueous paint compositions comprising the aqueous dispersions.

### Prior Art

It has been described in the prior art that varnishes based on acrylic emulsions can be obtained by emulsion polymerization reactions of ethylenically unsaturated monomers using water dispersive urethane oligomers having cationic or anionic properties as an emulsifier (see for instance Japan Patent Laid-Open Publication No. SHO 61-2720). The emulsified varnishes thus obtained are very useful as aqueous paints.

European patent application EP-A-181486 reveals oligourethane dispersions in water with built-in unsaturated groups and their use in the production of high sheen lacquers for leather from the water phase. The compositions contain one or more macrodiols as the major component along with mono or di-functional compounds, possibly having cationic or anionic groups, and diisocyanates.

Surfactant ability of the aforementioned urethane oligomers is, however, not sufficient for stabilizing the emulsions during the synthesis of the emulsified varnishes, thereby making it necessary in many cases to add other kinds of emulsifiers of lower molecular weight for improving the stability of the emulsion systems. Thus, moldings or coated films applied with these emulsified varnishes have some deficiencies in water resistance and weatherability. When the emulsions are used by blending with other materials, they are liable to aggregate and hence have a problem in stability during storage.

### SUMMARY OF THE INVENTION

Accordingly, an essential object of the invention is to provide a polymer composition having a novel urethane bond which is used for producing an aqueous dispersion without any problems or deficiencies described above.

Further objects of the invention are to provide an aqueous dispersion obtained from emulsion polymerization of the monomer in the presence thereof, and an aqueous paint composition comprising the aqueous dispersion.

The present invention provides a polymer composition comprising an oligomer with zwitterionic groups, which is dispersed in water containing primary and/or secondary polyamines or in an aqueous medium containing hydrophilic solvents, wherein the oligomer is synthesized by allowing to react (a) a diol compound with a molecular weight of 100 to 5000 and having terminal hydroxyl groups, (b) a diisocyanate compound, (c) a compound having at least one active hydrogen and zwitterionic groups in the molecule and (d) an ethylenically unsaturated monomer with active hydrogens in the molecule with each other wherein the polymerisation reaction of the components (a) to (d) is carried out at 5 to 100°C for 1 to 3 hours, in the presence or absence of the solvent, under reaction conditions enriched in isocyanates, wherein the enrichment is in the range from 1.05 : 1 to 3 : 1 expressed as a ratio of NCO (component (b)) to the active hydrogen (components (a) + (c) + (d)), and the amount of the component (c) is in the range of (c) : (a) = 5 : 1 to 0.1 : 1 expressed as a molar equivalent of the active hydrogens and the amount of the component (d) is in the range from (d) : (a) + (c) = 0.001 : 1 to 0.5 : 1 expressed as a molar equivalent of the active hydrogens, whereby active hydrogen refers to O-bound hydrogen of the diol (a) and to O-, S- and N-bound hydrogen of the components (c) and (d).

The present invention also provides an aqueous dispersion which is obtained by emulsion polymerization of an ethylenically unsaturated monomer by using the afore-described polymer composite as an emulsifier.

The invention further provides an aqueous paint composition containing the above-described aqueous dispersion.

Diol compounds (a) used in the invention, which contain terminal hydroxyl groups and have a molecular weight of 100 to 5,000, include aliphatic diols such as neopentyl glycol, hexanediol and 1,2-alkylene oxide or corresponding bifunctional alcohols including ethylene oxide or propylene oxide; cycloaliphatic diols such as 1,4-cyclohexanediol and 4,4'-dihydroxycyclohexyl-2,2-propane; aromatic bifunctional alcohols such as bis(ethoxylated)bisphenol A and bis(pro-poxylated)bisphenol A; polyether diols such as polyethylene oxide diol, polyethylene oxide-propylene oxide diol, poly-propylene oxide diol and polytetramethylene oxide diol; polyester diols of the foregoing alcohols with polycarbonic acids or their acid anhydrides (examples of polycarbonic acids, preferably dicarbonic acids, and their acid anhydrides are maleic acid, fumaric acid, methaconic acid, cytraconic acid, itaconic acid, glutaric acid, adipic acid, isophthalic acid, terephthalic acid ; and diols based on polycarbonates and polycaprolactones. When molecular weight of the diol compounds is less than 100, the polymer compositions obtained have the deficiency of insufficient surfactant ability while when their molecular weight exceeds more than 5,000, reactivity with the isocyanates tends to be reduced.

Examples of the diisocyanate compounds (b) used in the invention are aliphatic, cycloaliphatic, aromatic-aliphatic and aromatic diisocyanates such as 1,2-ethylene diisocyanate, 1,4-tetramethylene diisocyanate, 1,6-hexamethylene diisocyanate, 2,2,4- or 2,4,4-trimethyl-1,6-hexamethylene diisocyanate, 1,12-dodecane diisocyanate, ω,ω'-diisocyanate dipropyl ether, cyclobutane-1,3-diisocyanate, cyclohexane-1,3- and -1,4-diisocyanate, 2,2-and -2,6-diisocyanato-1-methyl-cyclohexane, 3-isocyanatomethyl-3,5,5-trimethylcyclohexyl isocyanate (isophorone diisocyanate), 2,5- and 3,5-bis-(isocyanatomethyl)-8-methyl-1,4-methanodecahydronaphthalene, 1,5-, 2,5-, 1-6- and 2,6-bis (isocyanatomethyl)-4,7-methano-hexahydrindane, 1,5-, 2,5-, 1,6- and 2,6 -bis(isocyanato)-4,7-methano-hexahydrindane, dicyclohexyl-2,4'- and 4-4'-diisocyanate, 2,4- and 2,6-hexahydrotoluilene diisocyanate, perhydro-2,4- and 4,4'-diphenylmethane diisocyanate, ω,ω'-diisocyanato-1,4-diethylbenzene, 1,3- and 1,4-phenylene diisocyanate, 4,4'-diisocyanato-diphenyl, 4,4'-diisocyanato-3,3'-dichlorodiphenyl, 4,4'-diisocyanato-3,3'-dimethoxy-diphenyl, 4,4'-diisocyanato-3,3'-dimethyl-diphenyl, 4,4'-diisocyanato-3,3'-diphenyl-diphenyl, 2,4- and 4-4'-diisocyanatodiphenylmethane, naphthalene-1,5-diisocyanate, and toluilene diisocyanate such as 2,4- or 2,6-toluilene-diisocyanate, m-xylilene-diisocyanate, diphenylmethane-2,4'-diisocyanate and diphenylmethane-4,4'-diisocyanate.

The component (c) used in the invention are required to have at least one active hydrogen group in the molecule which is capable of reacting with the isocyanate group, and zwitterionic groups. Active hydrogen groups mean the hydrogen atom bound to oxygen, nitrogen or sulfur atoms, examples of which are hydroxyl, carboxyl, amino or thiol groups and hydroxyl group is preferable. The zwitterionic groups contain both acidic and basic groups. Examples of them include sulfobetaine, betaine or amino acid groups, of which sulfobetaine group is preferable. These compounds are, for example:

HO-CH₂CH₂-NH-CH₂CH₂SO₃H, (HO-CH₂CH₂)₂NCH₂CH₂SO₃H,

HO-CH₂CH₂-N(CH₂CH₂SO₃H)₂,

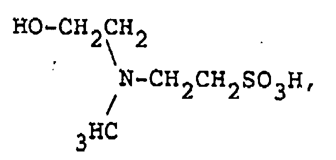

(HO-CH₂)₃C-NH-CH₂CH₂-SO₃H,

HOCH(CH₃)CH₂-NH-CH₂CH₂SO₃H,

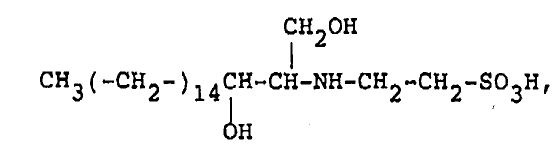

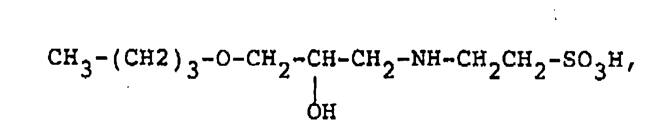

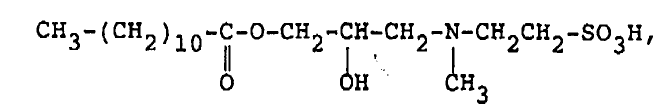

and

(HO-CH₂CH₂)₂NCH₂CH₂COOH.

The components (d) used in the invention are ethylenically unsaturated monomers having active hydrogens in the molecule. Definition of the active hydrogens is identical with the ones described above, hydroxyl groups being preferable also. Suitable monomers include hydroxyethyl (meth)acrylate, hydroxypropyl(meth)acrylate, hydroxybutyl (meth)acrylate, N-methylolacrylamide and adducts of -caprolactone with hydroxyethyl(meth)acrylate.

According to the invention, the afore-described components (a) to (d) are allowed to react with each other under the reaction conditions enriched in isocyanate, thereby obtaining urethane oligomers which have isocyanate groups or ethylenically unsaturated bonds at the molecular chain terminal and contain zwitterionic residues in the molecule. Reaction ratios between (b) component and (a)+(c)+(d) components are in the range from 1.05 : 1 to 3 : 1 expressed by the molar equivalent ratio of NCO ((b) component) vs. active hydrogen ((a)+(c)+(d) components), the range from 1.1 : 1 to 2 : 1 being preferably suitable. Of the active hydrogen containing components ((a)+(c)+(d)), the amount of (c) expressed by the molar equivalent ratio of the active hydrogen should be in the range from 5 : 1 to 0.1: 1, and the ratio from 2 : 1 to 0.1 : 1 being preferably suited. The amount of (d), in the molar equivalent ratio of (d) : (a)+(c) of the active hydrogen, is in the range from 0.001 : 1 to 0.5 : 1, the ratio from 0.01 : 1 to 0.1 : 1 being preferably suitable. The reaction order is not particularly specified. The reaction may proceed in accordance with the predetermined steps or the four components can be allowed to react at once. The reactions are carried out at the temperature of 50 to 110°C for 1 to 3 hours in the conventional solvents such as benzene, xylene, toluene, methyl pyrrolidone, butyl acetate, ethyl acetate or dimethylformamide, or they can be allowed to proceed without any solvents.

Polymer compositions useful for the emulsifiers according to the invention can be obtained by dispersing above zwitterion containing urethane oligomers in water in which primary and/or secondary polyamines are dissolved, or in an aqueous medium containing hydrophilic solvents. Suitable polyamines include ethylenediamine, 1,2-propylenediamine, 1,3-propanediamine, , isophoronediamine, propane-2,2-cyclohexylamine, N,N'-dimethyl-o-phenylenediamine, N,N'-di-p-tolyl-m-phenylenediamine, p-aminodiphenylamine, hydrazine, and substituted hydrazine such as dimethyl hydrazine and 1,6-hexamethylenebis-hydrazine. Examples of the hydrophilic solvents are alcohols such as ethanol, n-propanol, isopropanol, n-butanol, isobutanol, sec-butanol and tert-butanol, or ethers such as methyl cellosolve, cellosolve, butylcellosolve and butylcarbitol.

In the above-described polymer compositions, polyamines are considered to serve for oligomer chain elongation by reacting with the urethane oligomers.

Ethylenically unsaturated monomers are polymerized by a conventional method in the presence of the aqueous dispersion of the zwitterion containing urethane oligomer. Examples of the ethylenically unsaturated monomers are unsaturated nitriles such as acrylonitrile or methacrylonitrile; unsaturated amides such as acrylamide, methacrylamide and n-methylolacrylamide; (meth)acrylates such as methyl (meth)acrylate, ethyl(meth)acrylate, butyl(meth)acrylate and 2-ethylhexyl(meth(acrylate; unsaturated acids such as acrylic acid, methacrylic acid, maleic acid, malonic acid and itaconic acid; unsaturated aromatic hydrocarbons such as styrene, vinyltoluene, α-methylstyrene and methylvinyltoluene; unsaturated pyridines such as 2- or 4-vinylpyridine, 2-methyl-5-pyridine and 5-ethyl-2-vinylpyridine; and admixtures thereof. Characteristics of the paints can be improved by introducing small amount of polyfunctional monomers into the monomers. Examples of preferred polyfunctional monomers are ethyleneglycol diacrylate, glycerol diacrylate, neopentylglycol dimethacrylate, 1,4-cyclohexane-diol diacrylate, 1,4-benzene-diol dimethacrylate and pentaerythritol triacrylate. Polymerizations are usually carried out in the presence of polymerization initiators.

Polymerization initiators of organic peroxide such as benzoyl peroxide, t-butyl peroxide and cumene hydroperoxide; organic azo-compounds such as azobiscyano valeric acid, azobisisobutyronitrile, azobis(2,4-dimethyl)valeronitrile and azobis(2-amidinopropane)hydrochloride; water soluble inorganic radical initiators such as potassium persulfate, ammonium persulfate and hydrogen peroxide; and redox series of initiators are used preferably. Emulsion polymerizations are performed under the ordinary conditions. Any methods could be applied including; polymerization of ethylenically unsaturated monomer by adding them dropwise to the reaction mixture, in which a quantity of them may be optionally added previously; or dropwise polymerization of the emulsified monomer solution in which the monomer has been dispersed and emulsified with the polymer composition of the invention. Weight ratio (solid fraction) of the composition of the zwitterion containing urethane oligomer to the ethylenically unsaturated monomer is preferably in the range of 5 to 95 / 95 to 5.

The aqueous dispersions of the present invention can be obtained by the afore-described emulsion polymerization. Though this aqueous dispersion compositions themselves can be used for coating resins, combinations of them with water soluble resins are advantageous for the applications as high quality paints (middle or top coating of automobiles, for example). Water soluble acrylic resins are preferred for obtaining good coating films of excellent appearance and high quality. A preferred embodiment is defined in claim 5.

Monomer species constituting the water soluble acrylic resins to be used in the present invention are selected from ethylenic monomers with acidic residues, ethylenic monomer with hydroxylic residues, ethylenic monomers with amino residues, and other ethylenic monomers which can be copolymerized with the foregoing monomers.

Acidic groups of the ethylenic monomers with acidic residues include carboxylic groups, sulfonic groups and phosphoric groups. Examples of the ethylenic monomers with carboxylic groups are (meth)acrylic acid, ethacrylic acid, crotonic acid, propylacrylic acid, isopropylacrylic acid, itaconic acid, maleic anhydride and fumaric acid. Ethylenic monomers with sulfonic group are, for example, t-butylacrylamide sulfonate. Examples of ethylenic monomers with phosphoric group are methacryloyloxyethylene acid-phosphate and, methacryloyloxypropylene acid-phosphate. It is preferable that part of the acidic group of the ethylenic monomer with acidic residue is sulfonic acid residue. Sulfonic or phosphoric groups exhibit a hardening acceleration effect.

Examples of ethylenic monomers with hydroxyl groups are (meth)acrylic acid hydroxymethyl, (meth)acrylic acid hydroxyethyl, (meth)acrylic acid hydroxypropyl, N-methylol acrylamide and allylalcohol.

Ethylenic monomers with amino groups are, for example, N,N-dimethylaminoethyl (meth)acrylate and N,N-di-methylaminopropyl (meth)acrylate. Examples of other ethylenic monomers include; (meth)acrylic acid alkyl esters (e,g., methyl (meth)acrylate, ethyl (meth)acrylate, isopropyl (meth)acrylate, n-propyl (meth)acrylate, n-butyl (meth) acrylate, t-butyl (meth)acrylate, 2-ethylhexyl (meth)acrylate, n-octyl (meth)acrylate, lauryl (meth)acrylate, stearyl (meth)acrylate and dodecyl (meth)acrylate); adducts of (meth)acrylic acid ester monomers having oxyrane structure with fatty acids of fats and oils (e.g., adducts of glycidyl methacrylate with stearic acid); adducts of oxyrane compounds having alkyl groups of more than C₈ carbon number with (meth)acrylic acid; styrene, α-methylstyrene, ο-methyl-styrene, n-methystyrene, p-methylstyrene, p-tert-butyl-styrene, benzyl acrylate, benzyl methacrylate, itaconic acid esters (e.g. dimethyl itaconate), maleic acid esters (e.g. dimethyl maleate, fumaric acid esters (e.g. di-methyl fumarate), acrylonitrile, methacrylonitrile and vinyl acetate.

Copolymers can be obtained by using conventional copolymelization methods. After mixing a monomer preparation, for example, with a conventional porimerization catalyst, the mixture is added into a reaction vessel containing a solvent warmed at a temperature where polymerization reaction is able to proceed and the reaction mixture is subjected to aging, thereby obtaining a copolymer.

Hydration of the afore-described copolymer resins can be achieved by neutralizing the acidic residues such as carboxyl groups with basic substances such as monomethylamine, dimethylamine, trimethylamine, monoethylamine, triethylamine, monoisopropylamine, diisopropylamine, diethylenetriamine, triethylenetetramine, monoethanolamine, diethanolamine, triethanolamine, monoisopropanolamine, diisopropanolamine, dimethylethanolamine, morpholine, methyl morpholine, piperazine, ammonia, sodium hydroxide, potassium hydroxide and lithium hydroxide.

An acid value of 15 to 100 and a hydroxyl value of 30 to 200 are preferable in the water soluble acrylic acid resins of the present invention. Since this acid value and hydroxyl value are largely provided by the acidic residues and hydroxyl residues in the aforedescribed copolymers, the amount of the monomers used for the synthesis of the copolymers are controlled so that these acid and hydroxyl values of the resin compositions settle within the range described above. Acid values of less than 15 results in a poor stability of the aqueous dispersions while that of more than 100 causes poor water resistance of the coated films. Hydroxyl values of 30 or less result in a low cross-linking in the coated films, whereby deteriorating their water resistance. A value of over 200 causes insufficient water resistance. Amino compounds, block isocyanates or epoxy compounds can be added as hardening agents if necessary. Amino compounds include alkoxylated melamine formaldehyde condensates (condensates with melamine formaldehyde or paraformaldehyde, i.e. methoxymethylolmelamine, isobutoxylated methylolmelamine and n-butoxylated methylolmelamine). Epoxy compounds include alicyclic, aromatic or aliphatic epoxy compounds having two or more epoxide groups (for example, Epicoat 828, Epicoat 1001 and Epicoat 1004 manufactured by Shell Chemical co., and Epolite 40E, Epolite 400E, Epolite #1600 and Epolite #721 manufactured by Kyoei Fats and Oils co.), and at least one of these compounds is used.

Coloring agents, metallic pigments (i.e. aluminum), mica, colored mica or scaly iron oxide can be optionally added. Addition of metallic pigments forms an aqueous metallic paint in which metal flakes are well oriented and by which a metallic coating film of an excellent appearance is obtained.

Aqueous paints without coloring agents can be used for clear paints and they are used for the over coating paints such as metallic paints and solid-colored paints. In particular, over coating on the metallic paints is generally called wet-on-wet coating method, wherein clear paint is coated before baking and hardening of the metallic coated film and both coated films are baked and hardened together.

The polymer composition with urethane bonds according to the invention has a good emulsion stability during the polymerization when it is used for an emulsifier in emulsion polymerization reaction, thereby eliminating the needs of simultaneous use of another type of emulsifiers of lower molecular weight. Mixing stability of the aqueous dispersions obtained with the other kind of aqueous resins are excellent.

The aqueous metallic paints and clear paints according to the invention have good characteristics in either respective use or mixed use. The compositions show a peculiar viscosity, thereby giving excellent dripping properties for painting works under the wide range of conditions. Orientation of aluminum flakes in the aluminum pigments is, in particular, so good that the coated film displays an excellent appearance.

### Description of the Preferred Embodiments of the Invention

Embodiments of the present invention will be described in detail hereinafter referring to the examples.

### Example 1

### Synthesis of urethane prepolymer

In a 500 ml reaction vessel provided with a thermometer, stirrer and condenser, 12.78 parts by weight of N-dihydroxyethylaminoethane sulfonic acid (mp. 153C), 9.09 parts by weight of triethylamine and 62.4 parts by weight of N-methylpyrrolidone were added and dissolved by heating at 90°C. After adding 86.6 parts by weight of isophorone diisocyanate and 75 parts by weight of polypropyleneglycol (hydroxyl value; 112, molecular weight; 1,000) and stirring for 10 minutes, 0.08 part by weight of dibutyl tin dilaurate was added. Then the temperature was raised to 95°C and the mixture was allowed to react for 1 hour. After cooling to 60°C, 1.58 parts by weight of hydroxyethyl methacrylate was added and the mixture was allowed to react at 60°C for 2 hours. After cooling, the reaction mixture was diluted with 20.4 parts by weight of methylmethacrylate and 20.1 parts by weight of n-butylacrylate, thereby obtaining a solution of urethane prepolymer.

### Synthesis of aqueous polymer composite having unsaturated double bonds

In a 1000 ml reaction vessel provided with a thermometer, stirrer, condenser and dropping funnel, 227 parts by weight of deionized water and 3.1 parts by weight of hydrazine were added and, with stirring, 136.4 parts by weight of the above-described urethane prepolymer was added to the solution, followed by stirring for 30 minutes. The resultant composition was a stable aqueous dispersion with white turbidity.

### Example 2

### Synthesis of the aqueous dispersion composition

In a 1000 ml reaction vessel provided with a thermometer, stirrer, condenser and dropping funnel, 367 parts by weight of the above-mentioned aqueous polymer composite with unsaturated double bonds was added, followed by an addition of 130.6 parts by weight of aqueous potassium persulfate solution (potassium persulfate/deionized water; 0.6/130) with thorough stirring. The reaction temperature was then raised to 90°C and a mixed solution of monomers, 60 parts by weight of methyl methacrylate and 60 parts by weight of n-butyl acrylate, was added dropwise in 1 hour. After the addition was completed, 20.1 parts by weight of the aqueous solution of potassium persulfonate (potassium persulfonate/deionized water; 0.1/20) was added again and the mixed solution was stirred for additional 1 hour. After cooling, the solution was filtered through a 400 mesh of filter, thereby obtaining a stable aqueous dispersion.

### Example 3

### Preparation of the aqueous metallic paint

### Synthesis of the aqueous acrylic resin

A 1 liter reaction vessel provided with a stirrer, temperature regulator and cooling pipe was charged with 76 parts by weight of ethyleneglycol monobutylether. Then, 61 parts by weight of monomer solution comprising, each by weight, 4.5 parts of styrene, 63 parts of methyl methacrylate, 48 parts of 2-hydroxyethyl methacrylate, 117 parts of n-butyl acrylate, 27 parts of methacrylic acid and 3 parts of azobisisobutylonitrile was added with stirring while keeping the reaction temperature at 120°C. After adding further 245 parts by weight of the above-mentioned monomer solution in 3 hours, the solution was continued to stir for additional 1 hour. Then 28 parts by weight of dimethylethanolamine and 200 parts by weight of deionized water were added to the reaction mixture, thereby obtaining an acrylic resinous varnish with molecular weight of 12,000 containing 50% of volatile components. The resin had an OH value of 70 and an acid value of 58.

Finally, 140 parts by weight of Cymel 303 "methoxylated methylolmelamine" manufactured by Mitsui Toatsu co.) was added to 30 parts by weight of the resinous varnish.

### Preparation of metallic paint

To 170 parts by weight of the afore-described resinous varnish, 50 parts by weight of the aqueous dispersion (converted in solid resin fraction; 125 parts by weight as total varnish) and. 15 parts by weight of aluminum pigment (converted in the metallic fraction) were added and mixed. The mixture was then diluted with the deionized water to give a viscosity value of 25 to 30 seconds as measured by No 4 Ford cup method, thereby a metallic paint was prepared.

### Preparation of the aqueous clear paint

A polymer composition was synthesized, like the case in the preparation of the metallic paint resin wherein the acrylic resin is prepared, from 65.8 parts of n-butyl acrylate, 11.8 parts of methyl methacrylate, 16.2 parts of 2-hydroxyethyl methacrylate, 61 parts of methacrylic acid and 5 parts of azobisisobutylonitrile, each by weight, using butyldiglycol as a solvent. The resultant resin was neutralized completely with diethanolamine. The polymer composition had a OH value of 70 and an acid value of 40.

The resinous varnish obtained was cross-linked using Cymel 303 as a cross-linking agent and compounded to a composition of 70/30 of the solid resin fraction. The composition was diluted with the deionized water to give a viscosity value of 30 to 35 seconds as measured by No 4 Ford cup method, thereby preparing an aqueous clear paint.

### Coating experiment 1

The metallic paint and then the aqueous clear paint which were prepared by the methods described in Example 3 were air-sprayed on a piece of intermediate-coated steel plate under the condition of 23°C in the temperature and 60% in the relative humidity, wherein the dry film thickness of the former paint was 20µ while that of the latter paint was 30µ respectively. The former paint was coated by two stage with an interval of 1 minute and, after 5 minutes of drying, the latter paint was coated by one stage followed by 7 minutes' setting. The coated plate was then subjected to baking at 150°C for 20 minutes in a drying chamber, thereby manufacturing a test plate. Adhesive property and appearance of the coated film on the test plate were evaluated and the results are listed in Table 1. The intermediate-coated steel plate used was prepared as follows; a piece of polished soft steel plate subjected to a chemical degrease treatment was coated and baked with an electrodeposition paint for automobiles, followed by coating and baking again with a intermediate-coat paint for automobiles.

**Table 1**

| | Adhesive Property | Appearance |
|---|---|---|
| Example 3 | o | o |

### (Evaluation method of the adhesive property)

A cross-cut was scratched in the coated film on the steel plate and the film was subjected to a peeling test using a piece of adhesive tape. The mark X means that peeling was observed while the mark O is not observed.

### Example 4

### Synthesis of urethane prepolymer

In a 1 liter reaction vessel provided with a thermometer, stirrer and condenser, 42.6 parts by weight of N,N-dihydroxyethylaminosulfonic acid (mp: 153°C) 30.3 parts by weight of triethylamine and 208 parts by weight of N-methylpyrrolidone were added and the mixture was dissolved by heating at 95°C in a stream of nitrogen. After adding 166.5 parts by weight of isophorone diisocyanate, 200 parts by weight of polypropylene glycol (hydroxyl value: 112.2, molecular weight: 1000) and 160 parts by weight of polypropylene glycol (hydroxyl value: 56.1, molecular weight: 2000) and stirring for 10 minutes, 0.28 parts by weight of dibutyl tin laurate was added to the mixture. The temperature was then raised to 95°C and the mixture was allowed to react for 1 hour. After cooling the reaction mixture to 60°C, 5.2 parts by weight of hydroxyethl methacrylate and 0.28 parts by weight of hydroquinone monomethylether were added and the mixture was again made to react at 60°C for 2 hours. After cooling, the reaction mixture was diluted with 45 parts by weight of methyl methacrylate and 90 parts by weight of n-butyl methacrylate, thereby obtaining an urethane prepolymer solution.

### Synthesis of aqueous polymer composition with unsaturated double bonds

In a 1 liter reaction vessel provided with a thermometer, stirrer, condenser and dropping funnel, 342.9 parts by weight of deionized water and 1.8 parts by weight of hydrazine hydrate were added and, with stirring, 135.5 parts by weight of the afore-described solution of urethane prepolymer was added followed by stirring for 30 minutes. The composition obtained was a stable and turbid aqueous dispersion.

### Synthesis of aqueous dispersion composition

In a 1 liter reaction vessel provided with a thermometer, stirrer, condenser and dropping funnel, 480.2 parts by weight of the afore-described aqueous composition with unsaturated double bonds was added. Then, 357 parts by weight of aqueous solution of potassium persulfonate was added with thorough stirring. After raising the temperature to 90°C, a mixed monomer solution of 48.3 parts by weight of methyl methacrylate and 96.7 parts by weight of n-butyl acrylate was added dropwise in 1 hour. After completing the dropwise addition, 11.2 parts by weight of aqueous solution of potassium persulfonate (potassium persulfonate/deionized water = 1/69) was added and stirring was continued for additional 1 hour. After cooling, the solution was filtered by a 400 mesh filter, thereby obtaining a stable aqueous dispersion composition.

### Example 5

### Synthesis of urethane prepolymer

In a 2 liter reaction vessel provided with a thermometer, stirrer and condenser, 34.1 parts by weight of N,N-dihydroxyethylaminosulfonic acid (mp: 153°C), 21.4 parts by weight of dimethylolpropionic acid, 48.5 parts by weight of triethylamine and 320 parts by weight of N-methylpyrrolidone were added and dissolved by heating at 90°C. After adding 355.2 parts by weight of isophorone diisocyanate, 288 parts by weight of polypropylene glycol (hydroxyl value: 112.2, molecular weight: 1000) and 320 parts by weight of polypropylene (hydroxyl value: 56.1, molecular weight: 2000) and stirring for 10 minutes, 0.53 parts by weight of dibutyl tin laurate was added. The temperature of the mixed solution is raised to 95°C and the mixture was allowed to react for 1 hour. After cooling to 60°C, 8.3 parts by weight of hydroxyethyl methacrylate and 0.53 parts by weight of hydroquinone monomethylether are added and the mixture was allowed to react at 60°C for 2 hours. After cooling, the reaction solution was diluted with 108.8 parts by weight of methyl methacrylate and 107.2 parts by weight of n-butyl acrylate, thereby obtaining a solution of urethane prepolymer.

### Synthesis of the aqueous polymer composition with unsaturated double bonds

In a 1 liter reaction vessel provided with a thermometer, stirrer, condenser and dropping funnel, 380 parts by weight of deionized water and 6 parts by weight of ethylene diamine were added and, with stirring, 201.6 parts by weight of the afore-described solution of urethane prepolymer was added, followed by stirring for 30 minutes. The composition obtained was turbid and stable aqueous dispersion.

### Synthesis of the aqueous dispersion composition

In a 1 liter reaction vessel provided with a thermometer, stirrer, condenser and dropping funnel, 587.6 parts by weight of the afore-mentioned aqueous polymer composition with unsaturated double bonds was added, followed by an addition of 401 parts by weight of the aqueous solution of potassium persulfonate with thorough stirring. After raising the reaction temperature to 90°C, a mixed monomer solution of 92 parts by weight of methyl methacrylate was added dropwise in 1 hour. After completing the addition, 8 parts by weight of the aqueous solution of potassium persulfonate (potassium persulfonate/deionized solution = 1/39) was added and the mixed solution was continued to stir for additional 1 hour. After cooling, the solution was filtered by a 400 mesh filter, thereby obtaining a stable composition of the aqueous dispersion.

### Example 6

### Synthesis of the urethane prepolymer

In a 1 liter reaction vessel provided with a thermometer, stirrer and condenser, 32.2 parts by weight of (N,N-dihydroxyethylamino)propionic acid (mp: 160°C), 20.2 parts by weight of triethylamine and 100 parts by weight of N-methylpyrrolidone were added and the mixture was dissolved by heating at 80°C. After adding 222 parts by weight of isophorone diisocyanate, 180 parts by weight of polypropylene glycol (hydroxyl residue value: 112.2, molecular weight: 1000) and 200 parts by weight of polypropylene glycol (hydroxyl residue value: 56.1, molecular weight: 2000) and stirring for 10 minutes, 0.33 parts by weight of dibutyl tin laurate was added. The temperature was then raised to 80°C and the mixture is allowed to react for 1 hour. After cooling to 60°C, 5.2 parts by weight of hydroxyethyl methacrylate and 0.33 parts by weight of hydroxymonomethyl ether were added and the mixture was allowed to react at 60°C for 2 hours. After cooling, the mixture was diluted with 68 parts by weight of methyl methacrylate and 67 parts by weight of n-butyl acrylate, thereby obtaining a solution of urethane prepolymer.

### Synthesis of the aqueous polymer composition with unsaturated double bonds

In a 1 liter reaction vessel provided with a thermometer, stirrer, condenser and dropping funnel, 306 parts by weight of deionized water and 4.5 parts by weight of hydrazine hydrate were added in a stream of nitrogen and, with stirring, 162.8 parts by weight of the afore-described solution of urethane prepolymer was added. Stirring was continued for additional 30 minutes. The composition obtained was a turbid and stable aqueous dispersion.

### Synthesis of the aqueous dispersion composition

In a 1 liter reaction vessel provided with a thermometer, stirrer, condenser and dropping funnel, 473.3 parts by weight of the afore-described aqueous polymer composite with unsaturated double bonds, and then 307 parts by weight of aqueous solution of potassium persulfonate (potassium persulfonate/deionized water = 1/340) were added with thorough stirring. The reaction temperature is raised to 90°C, and the mixed monomer solution of 104.2 parts by weight methyl methacrylate and 104 parts by weight of n-butyl acrylate was added dropwise in 1 hour. After the dropwise addition had been completed, 14.7 parts by weight of aqueous solution of potassium persulfonate (potassium persulfonate/deionized water = 1/60) was added and stirring was continued for additional 1 hour. After cooling, the solution was filtered with a 400 mesh of filter, thereby obtaining a stable composition of the aqueous dispersion.

### Examples 7 to 9

A metallic paint was prepared by using, instead of the aqueous dispersion in Example 2, the composition of the aqueous dispersion obtained from Examples 4 to 6 by a similar method described in Example 3. The mixing ratio of each component is made identical with each other. The same aqueous clear paint as was described in Example 3 was used for the evaluation similar to the one described in Example 1 of the painting experiment. The results are listed in Table 2.

### Comparative Example 1

The water soluble acrylic resin obtained in Example 3, 170 parts by weight, was mixed with 10 parts by weight, in the metallic fraction, of the aluminum pigment with stirring. The mixture was diluted to a concentration of the viscosity value of 25 to 30 seconds as measured by Ford cup method.

As was described in Example 1 of the painting experiment, the aqueous clear paint was coated and evaluated. The results are listed in Table 2.

**Table 2**

| | Example 7 | Example 8 | Example 9 | Comparative Example 1 |
|---|---|---|---|---|
| Aqueous dispersion used | Example 4 | Example 5 | Example 6 | - |
| Adhesive property | o | o | o | × |
| Appearance of coated film | Good | Good | Good | bad |

The evaluation methods are identical with those used for Table 1.

## Claims

1. A polymer composition comprising an oligomer with zwitterionic groups, which is dispersed in water containing primary and/or secondary polyamines or in an aqueous medium containing hydrophilic solvents, wherein said oligomer is synthesized by allowing to react (a) a diol compound with molecular weight of 100 to 5000 and having terminal hydroxyl groups, (b) a diisocyanate compound, (c) a compound having at least one active hydrogen and zwitterionic groups in the molecule and (d) an ethylenically unsaturated monomer with active hydrogens in the molecule, with each other, wherein the polymerisation reaction of the components (a) to (d) is carried out at 5 to 100°C for 1 to 3 hours, in the presence or absence of the solvent, under reaction conditions enriched in isocyanates, wherein the enrichment is in the range from 1.05 : 1 to 3 : 1 expressed as a ratio of NCO (component (b)) to the active hydrogen (components (a) + (c) + (d)), and the amount of the component (c) is in the range of (c) : (a) = 5 : 1 to 0.1 : 1 expressed as a molar equivalent of the active hydrogens and the amount of the component (d) is in the range from (d) : (a) + (c) = 0.001 : 1 to 0.5 : 1 expressed as a molar equivalent of the active hydrogens, whereby active hydrogen refers to O-bound hydrogen of the diol (a) and to O-, S- and N-bound hydrogen of the components (c) and (d).

2. A composition according to claim 1, wherein the active hydrogens exist in hydroxyl groups, carboxylic groups, amino groups or thiol groups.

3. A composition according to claim 1, wherein the zwitterionic groups are sulfobetaine groups, betaine groups or amino acid groups, or a mixture thereof.

4. An aqueous dispersion obtained by blending 95 to 5 parts by weight of the ethylenically unsaturated monomers with 5 to 95 parts by weight (in solid fraction) of the composition as set forth in claim 1, followed by an emulsion polymerisation reaction of the blended mixture.

5. An aqueous paint composition containing 95 to 10 parts by weight (in solid fraction) of water soluble acrylic resins, which have an acid value of 15 to 100 and a hydroxyl value of 30 to 200, relative to 5 to 90 parts by weight of the aqueous dispersion as set forth in claim 4 and containing hardening agents.

6. An aqueous paint composition according to claim 5, wherein the hardening agent is a melamine resin.

7. An aqueous paint composition according to claim 5 wherein the composition further contains metallic pigments.

8. An aqueous paint composition according to claim 7, wherein the metallic pigment is an aluminum pigment.

## Patentansprüche

1. Polymerzusammensetzung, umfassend ein Oligomer mit zwitterionischen Gruppen, das in Wasser, umfassend primäre und/oder sekundäre Polyamine, oder in einem wäßrigen Medium mit hydrophilen Lösungsmitteln dispergiert ist, worin das Oligomer synthetisiert ist durch Reaktion (a) einer Diol-Verbindung mit einem Molekulargewicht von 100 bis 5 000 und mit terminalen Hydroxyl-Gruppen, (b) einer Diisocyanat-Verbindung, (c) einer Verbindung mit zumindest einem aktiven Wasserstoff und zwitterionischen Gruppen in dem Molekül und (d) eines ethylenisch ungesättigten Monomers mit aktiven Wasserstoffen in dem Molekül, worin die Polymerisationsreaktion der Komponenten (a) bis (d) bei 5 bis 100°C für 1 bis 3 h in der Gegenwart oder Abwesenheit des Lösungsmittels unter Reaktionsbedingungen, bei denen Isocyanate angereichert sind, durchgeführt wird, worin die Anreicherung in dem Bereich von 1,05:1 bis 3:1 ist, ausgedrückt als ein Verhältnis von NCO (Komponente (b)) zu dem aktiven Wasserstoff (Komponenten (a) + (c) + (d)), und worin die Menge der Komponente (c) in dem Bereich von (c) : (a) = 5:1 bis 0,1:1 ist, ausgedrückt als ein molares Äquivalent der aktiven Wasserstoffe, und worin die Menge der Komponente (d) in dem Bereich von (d) : (a) + (c) = 0,001:1 bis 0,5:1 ist, ausgedrückt als ein molares Äquivalent der aktiven Wasserstoffe, worin der aktive Wasserstoff einen O-gebundenen Wasserstoff des Diols (a) und O-, S- und N-gebundenen Wasserstoff der Komponenten (c) und (d) betrifft.

2. Zusammensetzung nach Anspruch 1, worin die aktiven Wasserstoffe in Hydroxyl-Gruppen, Carboxyl-Gruppen, Amino-Gruppen oder Thiol-Gruppen existieren.

3. Zusammensetzung nach Anspruch 1, worin die zwitterionischen Gruppen Sulfobetain-Gruppen, Betain-Gruppen oder Aminosäure-Gruppen oder eine Mischung davon sind.

4. Wäßrige Dispersion, erhalten durch Vermischen von 95 bis 5 Gew.-Teilen der ethylenisch ungesättigten Monomeren mit 5 bis 95 Gew.-Teilen (als Feststoff-Fraktion) der Zusammensetzung nach Anspruch 1, mit anschließender Emulsions-Polymerisationsreaktion der gemischten Mischung.

5. Wäßrige Farbzusammensetzung, umfassend 95 bis 10 Gew.-Teile (als Feststoff-Fraktion) an wasserlöslichen Acrylharzen, die einen Säurewert von 15 bis 100 und einen Hydroxylwert von 30 bis 200 haben, und 5 bis 90 Gew.-Teile der wäßrigen Dispersion nach Anspruch 4, und Härtungsmittel.

6. Wäßrige Farbzusammensetzung nach Anspruch 5, worin das Härtungsmittel ein Melaminharz ist.

7. Wäßrige Farbzusammensetzung nach Anspruch 5, worin die Zusammensetzung weiterhin metallische Pigmente enthält.

8. Wäßrige Farbzusammensetzung nach Anspruch 7, worin das metallische Pigment ein Aluminium-Pigment ist.

## Revendications

1. Composition de polymère comprenant un oligomère ayant des groupes zwitterioniques, qui est dispersé dans de l'eau contenant des polyamines primaires et/ou secondaires ou dans un milieu aqueux contenant des solvants hydrophiles, dans laquelle on synthétise ledit oligomère en laissant réagir (a) un composé de type diol présentant une masse moléculaire de 100 à 5000 et ayant des groupes terminaux hydroxy, (b) un composé de type diisocyanate, (c) un composé ayant au moins un atome d'hydrogène actif et des groupes zwitterioniques dans la molécule et (d) un monomère éthyléniquement insaturé ayant des atomes d'hydrogène actif dans la molécule, les uns avec les autres, où la réaction de polymérisation des composants (a) à (d) est réalisée à une température de 5 à 100°C pendant 1 à 3 heures, en présence ou en l'absence de solvant, dans des conditions de réaction enrichies en isocyanate, l'enrichissement étant situé dans l'intervalle allant de 1,05 : 1 à 3 : 1, exprimé par le rapport des groupes NCO (composant (b)) aux atomes d'hydrogène actif (composants (a) + (c) + (d)), et la quantité du composant (c) étant telle que (c) : (a) = 5 : 1 à 0,1 : 1, exprimée en équivalent molaire des atomes d'hydrogène actif et la quantité du composant (d) étant telle que (d) : (a) + (c) = 0,001 : 1 à 0,5 : 1, exprimée en équivalent molaire des atomes d'hydrogène actif, un atome d'hydrogène actif concernant ici un atome d'hydrogène lié à O du diol (a) et des atomes d'hydrogène liés à O, S et N des composants (c) et (d).

2. Composition selon la revendication 1, dans laquelle les atomes d'hydrogène actif se trouvent dans des groupes hydroxy, des groupes carboxyliques, des groupes amino ou des groupes thiol.

3. Composition selon la revendication 1, dans laquelle les groupes zwitterioniques sont des groupes sulfobétaïne, des groupes bétaïne ou des groupes aminoacide, ou un mélange de ceux-ci.

4. Dispersion aqueuse obtenue par mélange de 95 à 5 parties en poids des monomères éthyléniquement insaturés avec 5 à 95 parties en poids (en fraction solide) de la composition selon la revendication 1, suivi d'une réaction de polymérisation en émulsion du mélange réalisé.

5. Composition de peinture aqueuse contenant 95 à 10 parties en poids (en fraction solide) de résines acryliques solubles dans l'eau, qui ont un indice d'acide de 15 à 100 et un indice d'hydroxy de 30 à 200, pour 5 à 90 parties en poids de la dispersion aqueuse selon la revendication 4 et contenant des agents durcisseurs.

6. Composition de peinture aqueuse selon la revendication 5, dans laquelle l'agent durcisseur est une résine mélamine.

7. Composition de peinture aqueuse selon la revendication 5, où la composition contient en outre des pigments métalliques.

8. Composition de peinture aqueuse selon la revendication 7, dans laquelle le pigment métallique est un pigment d'aluminium.
